# EUROPÄISCHE PATENTSCHRIFT

(11) **EP 3 613 272 B1**
(45) Veröffentlichungstag und Bekanntmachung des Hinweises auf die Patenterteilung: **10.08.2022**
(21) Anmeldenummer: 19178608.6
(22) Anmeldetag: 06.06.2019
(51) Int. Cl.: A01D 41/12, A01D 41/127, A01F 12/40

(54) **MÄHDRESCHER**
COMBINE HARVESTER
MOISSONNEUSE-BATTEUSE

(30) Priorität: 24.08.2018 DE 102018120741
(43) Veröffentlichungstag der Anmeldung: 26.02.2020
(73) Patentinhaber: CLAAS Selbstfahrende Erntemaschinen GmbH, 33428 Harsewinkel (DE)
(72) Erfinder: Barther, Marvin, 33161 Hövelhof (DE); Neitemeier, Dennis, 59510 Lippetal (DE); Bormann, Bastian, 33334 Gütersloh (DE); Driftschröer, Peter, 33442 Herzebrock-Cöarholz (DE); Fischer, Frédéric, 59823 Arnsberg (DE); Kettelhoit, Boris, 33335 Gütersloh (DE)
(74) Vertreter: CLAAS Gruppe

(56) Entgegenhaltungen:
- EP-A1- 2 837 280
- EP-A1- 3 000 302
- EP-A1- 3 135 101
- EP-A1- 3 300 019
- DE-A1-102016 118 187

## Beschreibung

Die vorliegende Erfindung betrifft einen Mähdrescher gemäß dem Oberbegriff von Anspruch 1 sowie ein Verfahren zum Betrieb eines Mähdreschers gemäß dem Oberbegriff von Anspruch 16.

Häufig werden die von einem Mähdrescher während des Erntevorgangs geernteten Nichtkornbestandteile, etwa zur Verbesserung der Bodenqualität, unmittelbar auf dem abgeernteten Boden im rückwärtigen Bereich des Mähdreschers verteilt. Dabei ist es wichtig, dass das verteilte Häckselgut, das neben gehäckseltem Stroh auch Spreu aufweist, so beschaffen ist, dass es leicht verrottet, damit dessen Nährstoffanteile in der folgenden Vegetationsphase besonders gut verfügbar sind. Eine optimale Verrottung wird dann erreicht, wenn das auf dem Boden verteilte Häckselgut entsprechend kurzstückig ist und homogen über die Arbeitsbreite des Mähdreschers verteilt wird.

Aufgrund ihres geringen Gewichts werden die Häckselgutpartikel nach dem Verlassen der Gutverteileinrichtung durch den Luftwiderstand stark abgebremst. Um eine Verteilung über die Arbeitsbreite des Mähdreschers, die durchaus 9 m und mehr betragen kann, zu erreichen, muss der Häckselgutstrom Wurfweiten von mehreren Metern erreichen. Um dies zu ermöglichen, wird der aus dem Mähdrescher austretende Häckselgutstrom in Form eines Strahls oder in Form mehrerer Strahlen ausgeworfen, in dem bzw. denen die Dichte der Häckselgutpartikel so hoch ist, dass eine Verzögerung der Häckselgutpartikel durch den Luftwiderstand minimiert wird. Die Verteilung des Häckselgutes im rückwärtigen Bereich des Mähdreschers wird dabei nicht nur von der Dichte des Häckselgutstroms bzw. -strahls, der wiederum von der Dichte des Erntegutbestands auf dem Feld vor dem Mähdrescher beeinflusst wird, ab, sondern wird auch von Umgebungseinflüssen wie Wind und Geländeneigung beeinflusst.

Um die Verteilung des Häckselgutes im rückwärtigen Bereich des Mähdreschers zu optimieren, ist es beispielsweise aus der DE 10 2014 113 965 A1 bekannt, eine Regelungseinrichtung mit einer Sensoreinheit, die beispielsweise eine Kamera aufweist, und mit einer Bildverarbeitungseinheit vorzusehen, die es erlaubt, die Verteilung des Häckselgutes auf dem Boden hinter dem Mähdrescher zu überwachen und bei unerwünschten Abweichungen in der Verteilqualität des auf dem Boden liegenden Häckselgutes die Gutverteileinrichtung so zu regeln, dass die Qualität der Verteilung des Häckselgutes verbessert wird.

Eine andere Regelungseinrichtung ist aus der DE 10 2014 014 049 A1 für einen Mähdrescher bekannt. Die Sensoreinheit weist hier einen Radarsensor auf, der die Geschwindigkeiten einzelner das Radarsignal reflektierender Häckselgutpartikel ermittelt. Über weitere Sensoren werden die Windrichtung und - geschwindigkeit sowie die Geländeneigung erfasst. Über gespeicherte Kennkurven wird anhand dieser ermittelten Parameter auf die Wurfweite geschlossen und bei unerwünschten Abweichungen die Gutverteileinrichtung entsprechend geregelt. Ein weiteres Beispiel ist in der EP 3 135 101 offenbart.

Mit den bekannten Regelungseinrichtungen lässt sich also entweder anhand der ermittelten Häckselgutverteilung auf dem Boden eine Anpassung der Betriebsparameter der Gutverteileinrichtung durchführen, oder es wird dazu die ermittelte Geschwindigkeit des austretenden Häckselgutstroms zusammen mit gegebenenfalls weiteren Umgebungsparametern wie Geländeneigung und Windrichtung und -geschwindigkeit herangezogen. Die bekannten Systeme zur Regelung einer Gutverteileinrichtung sind aber noch optimierfähig.

Der Erfindung liegt das Problem zugrunde, einen Mähdrescher derart auszugestalten und weiterzubilden, dass möglichst frühzeitig auf die Qualität der Gutverteilung auf dem Boden Einfluss genommen werden kann.

Das obige Problem wird bei einem Mähdrescher gemäß dem Oberbegriff von Anspruch 1 durch die Merkmale des kennzeichnenden Teils von Anspruch 1 gelöst.

Wesentlich ist zum einen die grundsätzliche Überlegung, den austretenden Häckselgutstrom, der beispielsweise in Form eines Strahls oder in Form mehrerer Strahlen durch die Gutverteileinrichtung austritt, mittels des Verfahrens der Geschwindigkeitskennfeldermittlung, auch als Methode des optischen Flusses bekannt, zu analysieren. Die Methode des optischen Flusses ist an sich bekannt und basiert auf der Ermittlung und Analyse von Intensitätsmustern (Pixeln oder Pixelgruppen) in aufeinanderfolgenden Bildern einer Bildsequenz. So wird, insbesondere über eine oder mehrere Kameras, eine Bildsequenz erzeugt, also eine Vielzahl aufeinanderfolgender Bilder. Jeweils zwei aufeinanderfolgende Bilder, insbesondere zwei unmittelbar aufeinanderfolgende Bilder, der Bildsequenz werden zu einem Bildpaar gruppiert, wobei Positionsverschiebungen von Intensitätsmustern, d.h. von Pixeln oder Pixelgruppen, zwischen den Bildern des jeweiligen Bildpaares ermittelt werden. Die Intensitätsmuster werden dabei nicht zwingend von Objekten oder konkreten Merkmalen der Objekte, im vorliegenden Fall also nicht zwingend von Häckselgutmerkmalen, gebildet, sondern allgemein von Pixeln oder Pixelgruppen im Bild, deren Position sich von dem einen Bild auf das nächste Bild ändert. Aus diesen Positionsverschiebungen der Intensitätsmuster lässt sich, wenn die Zeitspanne zwischen den Bildern des Bildpaares bekannt ist, auf die Geschwindigkeit schließen, mit denen sich die Intensitätsmuster fortbewegen. Auch die Richtung, in die sich die Intensitätsmuster fortbewegen, lässt sich daraus ermitteln. Die Methode des optischen Flusses umfasst also die pixelbasierte Generierung von Informationen einerseits zu Geschwindigkeiten von Intensitätsmustern und andererseits über deren Bewegungsrichtungen. Die Geschwindigkeiten mehrerer Intensitätsmuster lassen sich für jedes Bildpaar und jede aus mehreren Bildpaaren bestehende Bildsequenz zu Geschwindigkeitskennfeldern zusammenfassen, die auch visuell dargestellt werden können. Bei einem solchen Geschwindigkeitskennfeld spricht man allgemein vom optischen Fluss.

Die beschriebene Methode des optischen Flusses wird also vorschlagsgemäß zum einen dazu verwendet, den aus einer Gutverteileinrichtung eines Mähdreschers austretenden Häckselgutstrom pixelbasiert hinsichtlich Geschwindigkeitsbetrag und -richtung zu analysieren. Zum anderen ist bei der vorschlagsgemäßen Lösung aber auch wesentlich, dass mittels der erhaltenen Informationen eine Prognose über die Häckselgutverteilung hinter dem Mähdrescher erstellt wird. Anhand entsprechender Prognoseinformationen, also Informationen zur zu erwartenden und entsprechend noch nicht erfolgten Gutverteilung, kann dann besonders frühzeitig durch entsprechende Regelungsmaßnahmen auf die Qualität der Gutverteilung auf dem Boden Einfluss genommen werden, um diese zu verbessern.

Vorschlagsgemäß ist nun vorgesehen, dass die Bildverarbeitungseinheit konfiguriert ist, basierend auf den von der Sensoreinheit erzeugten Bildern das Verfahren der Geschwindigkeitskennfeldermittlung anzuwenden, um die Austragsgeschwindigkeit des aus der Gutverteileinrichtung austretenden Häckselgutstroms zu ermitteln und eine Prognose zu erstellen, welche Verteilung des Häckselgutstroms auf dem Boden erwartet werden kann. Die Austragsgeschwindigkeit wird dabei insbesondere, wie im weiteren noch erläutert wird, anhand von Geschwindigkeitsbeträgen und Geschwindigkeitsrichtungen einzelner Pixel oder Pixelmuster in den analysierten Bildpaaren bestimmt. Die Prognose über die zu erwartende Verteilung des Häckselgutstroms umfasst dabei insbesondere die Parameter "Wurfweite" und "Querverteilung" des Häckselgutes.

Nach der Ausgestaltung gemäß Anspruch 2 wird zunächst von der Bildverarbeitungseinheit ein Geschwindigkeitskennfeld basierend auf den von der Sensoreinheit erzeugten Bildern erzeugt. Basierend auf diesem Geschwindigkeitskennfeld wird dann die Austragsgeschwindigkeit des Häckselgutstroms ermittelt und die beschriebene Prognose erstellt. Das erzeugte Geschwindigkeitskennfeld umfasst bzw. beschreibt jedenfalls Gutflussgeschwindigkeiten des aus der Gutverteileinrichtung austretenden Häckselgutstroms. Grundsätzlich ist es aber auch denkbar, dass neben Gutflussgeschwindigkeiten auch Geschwindigkeiten von Oberflächenabschnitten von Maschinenteilen der Gutverteileinrichtung und/oder von abgeernteten und/oder nicht abgeernteten Feldabschnitten, insbesondere seitlich neben der Fahrspur hinter dem Mähdrescher, umfasst sein können. Die Geschwindigkeiten, insbesondere Gutflussgeschwindigkeiten, werden dann insbesondere jeweils von zweidimensionalen Vektoren gebildet, beinhalten also Informationen über den Betrag der Geschwindigkeit und deren Richtung derselben.

Die Ansprüche 3 bis 5 definieren bevorzugte Möglichkeiten zur Erstellung des Geschwindigkeitskennfelds.

Nach den Ausgestaltungen gemäß den Ansprüchen 6 und 7 kann die Sensoreinheit auch einen oder mehrere wurfeigenschaftsrelevante Parameter des Häckselgutes ermitteln, nämlich den Parameter "Häckselgutdichte", "Häckselgutmasse", "Häckselgutfeuchte", "Häcksellänge", "Häckselaufspleißung", "Häckselzähigkeit" und/oder "Fruchtart". Dazu kann die Sensoreinheit einen oder mehrere Gutanalysesensoren aufweisen.

Anspruch 8 definiert die mögliche Anordnung von Sensoren der Sensoreinheit, nämlich des oder der Sensoren zur optischen Erfassung des austretenden Häckselgutstroms, womit die Bilder für die Geschwindigkeitskennfeldermittlung erzeugt werden, und/oder des oder der Gutanalysesensoren, womit die wurfeigenschaftsrelevanten Parameter ermittelt werden. Dabei ist es auch denkbar, dass ein solcher Gutanalysesensor von einem Sensor gebildet wird, der die Bilder für die Geschwindigkeitskennfeldermittlung erzeugt. Sensoren zur optischen Erfassung des austretenden Häckselgutstroms und zur Erzeugung der Bilder für die Geschwindigkeitskennfeldermittlung sind insbesondere Kameras. Gutanalysesensoren zur Ermittlung besagter wurfeigenschaftsrelevanter Parameter können ebenfalls Kameras sein, können zusätzlich oder alternativ aber auch Radarsensoren, Lidarsensoren und/oder Ultraschallsensoren sein, um nur einige Beispiele zu nennen. Zur Anordnung eines oder mehrerer solcher Sensoren eignet sich bevorzugt der Mähdrescher selbst, insbesondere der Heckbereich des Mähdreschers, und/oder eine dem Mähdrescher zugeordnete Drohne, insbesondere Flugdrohne.

Die Ansprüche 9 bis 11 betreffen bevorzugte Möglichkeiten der Erstellung der Prognose und welche Prognoseinformationen diese insbesondere umfasst. Besonders bevorzugt umfasst diese eine Prognoseinformation über die Wurfweite und/oder eine Prognoseinformation über die Querverteilung des Häckselgutes (Anspruch 11). Mit der Querverteilung ist die Verteilung des Häckselgutes quer zur Fahrtrichtung gemeint.

Die Ansprüche 12 und 13 betreffen die Regelung durch die Regelungseinrichtung basierend auf der erstellten Prognose. Dabei kann bzw. können die Gutverteileinrichtung bzw. eine oder mehrere Komponenten derselben und/oder weitere Arbeitsorgane des Mähdreschers und/oder die Fahrgeschwindigkeit des Mähdreschers geregelt werden.

Nach der weiteren Ausgestaltung gemäß Anspruch 14 weist die Regelungseinrichtung eine Datenausgabeeinheit auf, über die die jeweils von der Bildverarbeitungseinheit ermittelten Geschwindigkeiten insbesondere jeweils auch graphisch angezeigt werden können (Anspruch 15).

Nach einer weiteren Lehre gemäß Anspruch 16, der eigenständige Bedeutung zukommt, wird ein Verfahren zum Betrieb eines Mähdreschers, insbesondere eines vorschlagsgemäßen Mähdreschers, beansprucht, bei dem basierend auf von einer Sensoreinheit erzeugten Bildern die Methode des optischen Flusses angewendet wird, um die Austragsgeschwindigkeit des austretenden Häckselgutstroms zu ermitteln und eine Prognose über die Verteilung des Häckselgutstroms auf dem Boden zu erstellen. Hinsichtlich des Verfahrens sei auf die Ausführungen zum vorschlagsgemäßen Mähdrescher verwiesen.

Im Folgenden wird die Erfindung anhand einer lediglich ein Ausführungsbeispiel darstellenden Zeichnung näher erläutert. In der Zeichnung zeigt:
- Fig. 1: eine schematische Seitenansicht eines vorschlagsgemäßen Mähdreschers und
- Fig. 2: eine schematische Draufsicht und eine schematische Seitenansicht des Heckbereichs des Mähdreschers sowie des Bodens im rückwärtigen Bereich des Mähdreschers.

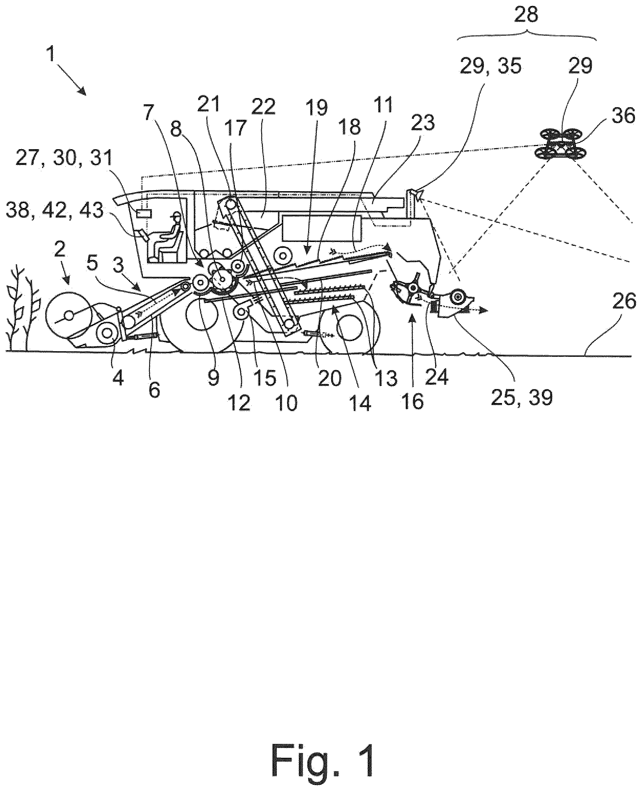

Der in Fig. 1 schematisch dargestellte Mähdrescher 1 nimmt in seinem frontseitigen Bereich ein als Getreideschneidwerk 2 ausgeführtes Vorsatzgerät auf, welches in an sich bekannterweise mit einem Schrägförderer 3 verbunden ist. Das Querförderorgan 4 des Schneidwerks 2 übergibt von diesem aufgenommenes Erntegut als Erntegutstrom 5 an den Schrägförderer 3, wobei dieser den Erntegutstrom 5 mittels umlaufendem Förderer 6 in seinem oberseitigen rückwärtigen Bereich an das Dreschwerk 7 übergibt. In dem Dreschwerk 7 wird der Erntegutstrom 5 zwischen Dreschtrommel 8 und Dreschkorb 9 hindurchgeführt und in zumindest zwei Teilströme 10, 11 getrennt. Der erste Teilstrom 10 besteht im Wesentlichen aus Körnern, Kurzstroh und Spreu und wird über einen Vorbereitungsboden 12 unmittelbar einer aus verschiedenen Siebebenen 13 bestehenden Reinigungseinrichtung 14 zugeführt. Die Reinigungseinrichtung 14 nimmt zudem eine Gebläseeinheit 15 auf, die einen die Siebebenen 13 durchsetzenden Luftstrom generiert.

Der im rückwärtigen Bereich des Dreschwerks 7 aus diesem austretende weitere Teilstrom 11, der im Wesentlichen aus Stroh und ggfs. einem Restkornanteil besteht, wird weiter zur Häckselvorrichtung 16 gefördert, wobei der Teilstrom 11 zunächst mittels einer Strohleittrommel 17 auf ein als Hordenschüttler 18 ausgeführtes Abscheideorgan 19 geleitet wird. Durch die oszillierende Bewegung des Hordenschüttlers 18 wird ein großer Anteil der in der Strohschicht enthaltenen Körner auf dem Hordenschüttler 18 abgeschieden und über einen Rücklaufboden 20 und den Vorbereitungsboden 12 an die Reinigungseinrichtung 14 übergeben. Das Abscheideorgan 19 kann in bekannter Weise auch als Axialabscheidevorrichtung mit einem oder mehreren Abscheiderotoren ausgeführt sein.

In der Reinigungseinrichtung 14 wird schließlich ein gereinigter Körnerstrom erzeugt, der mittels Förderelevatoren 21 in einen Korntank 22 gefördert und dort zwischengespeichert wird. Die Entleerung des Korntanks 22 erfolgt in der Regel mittels eines Korntankentleerförderers 23. Durch die oszillierende Bewegung des Hordenschüttlers 18 wird der zweite Teilstrom 11, der hier zum größten Teil nur noch aus Stroh besteht, an die nachgelagerte Häckselvorrichtung 16 abgegeben.

Nach Durchlaufen der Häckselvorrichtung 16, in der das durch den Mähdrescher 1 geführte und darin teilverarbeitete Erntegut zerkleinert wird, wird der resultierende Häckselgutstrom 24 über eine Gutverteileinrichtung 25 im rückwärtigen Bereich des Mähdreschers 1 ausgeworfen und dort auf dem Boden 26 verteilt.

Eine Regelungseinrichtung 27 überwacht dabei den Vorgang der Gutverteilung und führt bei unerwünschten Abweichungen Regelungsprozesse durch. Ein entsprechender Regelungsprozess kann Geschwindigkeits- bzw. Drehzahlregelungen und/oder Höhenverstellungen und/oder Positionsverstellungen umfassen. Auch wird hier und vorzugsweise über die Regelungseinrichtung 27 die Fahrgeschwindigkeit des Mähdreschers 1 geregelt.

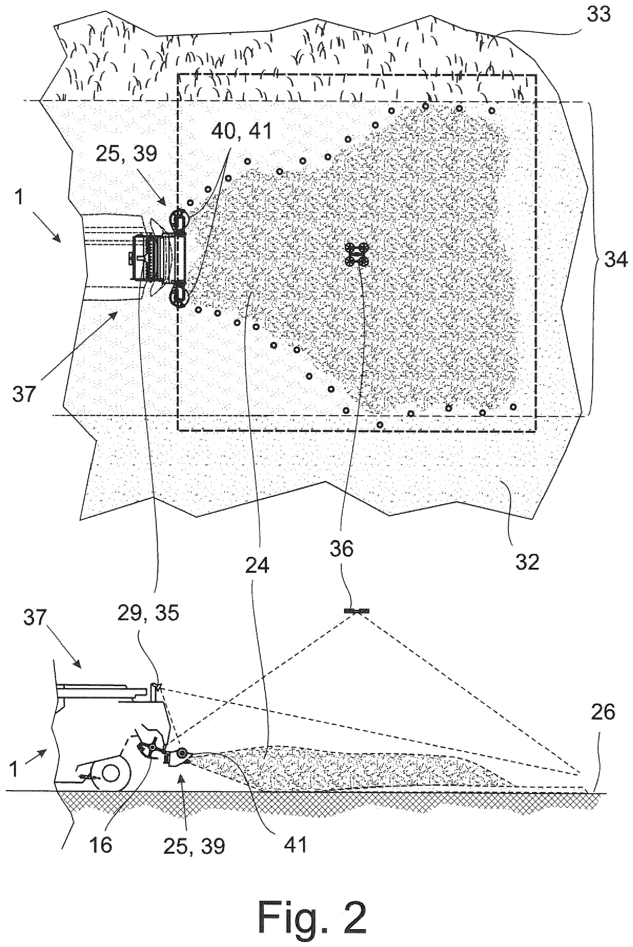

Die Regelungseinrichtung 27 weist eine Sensoreinheit 28 auf, die hier und vorzugsweise eine oder mehrere Kameras 29 aufweist, womit der aus der Gutverteileinrichtung 25 austretende Häckselgutstrom 24 optisch erfasst werden kann. Die jeweiligen Bereiche der optischen Erfassung sind in den Figuren 1 und 2 symbolisch jeweils gestrichelt dargestellt. Die Sensoreinheit erzeugt basierend auf dem von ihr optisch erfassten Häckselgutstrom 24 Bilder, insbesondere in Form einer Bildsequenz aus unmittelbar aufeinanderfolgenden Bildern.

Eine Bildverarbeitungseinheit 30 der Regelungseinrichtung 27, die insbesondere auch eine Recheneinheit 31 aufweist, dient zur Verarbeitung der Bilder, die von der Sensoreinheit 28 erzeugt werden.

Wesentlich ist nun, dass die Bildverarbeitungseinheit 30 des vorschlagsgemäßen Mähdreschers 1 konfiguriert ist, basierend auf den von der Sensoreinheit 28 erzeugten Bildern das Verfahren der Geschwindigkeitskennfeldermittlung, das allgemein auch als Methode des optischen Flusses bekannt ist, anzuwenden, um die Austragsgeschwindigkeit des aus der Gutverteileinrichtung 25 austretenden Häckselgutstroms 24 zu ermitteln und daraufhin eine Prognose zu erstellen, welche Verteilung des Häckselgutstroms 24 auf dem Boden 26 erwartet werden kann. Parameter der Verteilung, die von der Prognose umfasst sind, sind insbesondere die Wurfweite des Häckselgutes im Häckselgutstrom 24 nach dem Austritt aus dem Mähdrescher 1 über die Gutverteileinrichtung 25 und/oder die Querverteilung des Häckselgutes, nachdem der Häckselgutstrom 24 auf dem Boden 26 aufgetroffen ist. Durch die Erstellung einer solchen Prognose kann die Regelungseinrichtung 27 bereits frühzeitig, nämlich weit vor dem Auftreffen des Häckselgutstroms 24 auf dem Boden 26, Regelungsmaßnahmen durchführen, um die Qualität der Gutverteilung auf dem Boden 26 zu beeinflussen.

In der Draufsicht in Fig. 2 ist eine entsprechende, vorschlagsgemäß erstellte Prognose symbolisch durch kleine Ringsymbole entlang der Außenkonturen des Häckselgutstroms 24 im rückwärtigen Bereich des Mähdreschers 1 dargestellt.

Hier und vorzugsweise erzeugt die Bildverarbeitungseinheit 30 basierend auf den von der Sensoreinheit 28 bzw. der einen oder den mehreren Kameras 29 erzeugten Bildern ein Geschwindigkeitskennfeld. Dieses beschreibt hier Gutflussgeschwindigkeiten innerhalb des aus der Gutverteileinrichtung 25 austretenden Häckselgutstroms 24, der insbesondere in Form eines Strahls oder mehrerer Strahlen austritt. Die Gutflussgeschwindigkeiten werden dabei jeweils insbesondere von zweidimensionalen Vektoren gebildet und beinhalten somit eine Information über einen Betrag der Geschwindigkeit und eine Richtung derselben.

Zur Erstellung des Geschwindigkeitskennfelds gruppiert die Bildverarbeitungseinheit 30 jeweils zwei aufeinanderfolgende, insbesondere zwei unmittelbar aufeinanderfolgende, Bilder einer von der Sensoreinheit 28 erzeugten Bildsequenz zu einem Bildpaar. Dabei wird eine Zeitspanne zwischen den Bildern des jeweiligen Bildpaares von der Bildverarbeitungseinheit 30 erfasst. Zusätzlich oder alternativ kann eine Zeitspanne von der Bildverarbeitungseinheit 30 auch vorgegeben werden. Dabei weist jedes Bild des jeweiligen Bildpaares ein Intensitätsmuster, also einen Pixel oder eine Pixelgruppe, auf. Die Bildverarbeitungseinheit 30 ermittelt von den Intensitätsmustern zwischen den Bildern des jeweiligen Bildpaares Positionsverschiebungen, die Verschiebungsbeträge und Verschiebungsrichtungen umfassen. Hier und vorzugsweise werden die Verschiebungsbeträge und Verschiebungsrichtungen für jedes Bildpaar jeweils als Vektoren eines Vektorfeldes des jeweiligen Bildpaares zusammengefasst.

Aus den Verschiebungsbeträgen von den Intensitätsmustern zwischen den Bildern des jeweiligen Bildpaares und der Zeitspanne zwischen den Bildern des jeweiligen Bildpaares werden dann durch die Bildverarbeitungseinheit 30 Geschwindigkeiten berechnet. Die Geschwindigkeiten sind wie zuvor erläutert jedenfalls Gutflussgeschwindigkeiten, können aber zusätzlich auch Geschwindigkeiten von Oberflächenabschnitten von Komponenten der Gutverteileinrichtung 25 und/oder abgeerntete Feldabschnitte 32 und/oder nicht-abgeerntete Feldabschnitte 33, insbesondere seitlich der Fahrspur 34 hinter dem Mähdrescher 1, umfassen.

Die Sensoreinheit 28 ist hier und vorzugsweise außerdem konfiguriert, einen oder mehrere der wurfeigenschaftsrelevanten Parameter des Häckselgutes bzw. Häckselgutstroms 24 "Häckselgutdichte", "Häckselgutmasse", "Häckselgutfeuchte", "Häcksellänge", "Häckselaufspleißung", "Häckselzähigkeit" und "Fruchtart" zu ermitteln. Zu diesem Zweck weist die Sensoreinheit 28 einen oder mehrere Gutanalysesensoren 35 auf, die jeweils als Kamera, Radarsensor, Lidarsensor, Ultraschallsensor oder dgl. ausgestaltet sein können. Hier und vorzugsweise ist zumindest ein Gutanalysesensor 35 auch als Kamera 29 ausgebildet. Weitere ggfs. vorhandene Gutanalysesensoren 35 sind aus Übersichtlichkeitsgründen in der Zeichnung nicht dargestellt.

Die Gutanalysesensoren 35, insbesondere die hier dargestellte Kamera 29, ist bzw. sind hier und vorzugsweise am Mähdrescher 1 selbst, das heißt am Fahrzeug, angeordnet. Die Kamera oder Kameras 29 der Sensoreinheit 28, die zur optischen Erfassung des aus der Gutverteileinrichtung 25 austretenden Häckselgutstroms 24 und zur Erzeugung der Bilder dienen, auf deren Basis die Bildverarbeitungseinheit 30 das Verfahren der Geschwindigkeitskennfeldermittlung anwendet, ist bzw. sind hier und vorzugsweise an einer dem Mähdrescher 1 zugeordneten Drohne 36, hier Flugdrohne, angeordnet. Die Drohne 36 ist über die Regelungseinrichtung 27 so gesteuert, dass sie hier und vorzugsweise mit ihrer Kamera bzw. ihren Kameras 29 den Heckbereich 37 des Mähdreschers 1, insbesondere auch die Gutverteileinrichtung 25, sowie den Häckselgutstrom 24 im rückwärtigen Bereich des Mähdreschers 1 erfasst. Der oder die Sensoren bzw. Kameras 29 der Sensoreinheit 28, die zur Erzeugung der Bilder für die Geschwindigkeitskennfeldermittlung dienen, können zum Teil oder sämtlich auch am Mähdrescher 1 selbst, das heißt am Fahrzeug, angeordnet sein. Umgekehrt ist es auch denkbar, dass der oder die Gutanalysesensoren 35, die zur Ermittlung der besagten wurfeigenschaftsrelevanten Parameter dienen, zum Teil oder sämtlich an der Drohne 36 angeordnet sind. Grundsätzlich ist es sogar denkbar, ein und dieselbe Kamera 29 bzw. ein und dieselben Kameras 29 sowohl für die Erzeugung der Bilder zur Geschwindigkeitskennfeldermittlung als auch für die Ermittlung eines oder mehrerer der wurfeigenschaftsrelevanten Parameter zu verwenden.

Hier und vorzugsweise berücksichtigt die Bildverarbeitungseinheit 30, insbesondere ihre Recheneinheit 31, zur Erstellung der Prognose über die Verteilung des Häckselgutstroms 24 auf dem Boden 26 einen oder mehrere der ermittelten wurfeigenschaftsrelevanten Parameter. So hat jeder einzelne der Parameter "Häckselgutdichte", "Häckselgutmasse", "Häckselgutfeuchte", "Häcksellänge", "Häckselaufspleißung", "Häckselzähigkeit" und "Fruchtart" Einfluss auf die Wurfweite. Besonders bevorzugt berücksichtigt die Bildverarbeitungseinheit 30 bzw. die Recheneinheit 31 zur Erstellung der Prognose das Verhältnis der anhand des Geschwindigkeitskennfelds ermittelten Austragsgeschwindigkeit zu einem oder mehreren der wurfeigenschaftsrelevanten Parameter. Insbesondere wird hier das Verhältnis der Austragsgeschwindigkeit zur Häckselgutdichte und/oder zur Häckselgutmasse berücksichtigt.

Die erstellte Prognose über die Verteilung des Häckselgutstroms 24 auf dem Boden 26 umfasst besonders bevorzugt eine Prognoseinformation über die Wurfweite des Häckselgutes bzw. des Häckselgutstroms 24 hinter dem Mähdrescher 1. Auch kann die Prognose zusätzlich oder alternativ eine Prognoseinformation über die Querverteilung des Häckselgutes nach dem Auftreffen des Häckselgutstroms 24 auf dem Boden 26 umfassen. Zu diesem Zweck können auch Umgebungsparameter sensorisch erfasst werden, beispielsweise die Geländeneigung, die Windrichtung und/oder die Windgeschwindigkeit. Der jeweilige Umgebungsparameter kann dann bei der Erstellung der Prognose ebenfalls berücksichtigt werden.

Die Regelungseinrichtung 27 ist hier Bestandteil eines Fahrerassistenzsystems 38, wobei hinsichtlich dessen Ausgestaltung auf die DE 10 2014 113 965 A1 verwiesen werden darf, die auf die Anmelderin zurückgeht und deren Inhalt insoweit zum Gegenstand der vorliegenden Anmeldung gemacht wird.

Die Regelungseinrichtung 27 kann basierend auf der erstellten Prognose, insbesondere der Prognoseinformation über die Wurfweite und/oder die Prognoseinformation über die Querverteilung, die Gutverteileinrichtung 25 regeln. Zusätzlich oder alternativ kann die Regelungseinrichtung 27 auch weitere Arbeitsorgane des Mähdreschers 1, insbesondere einzelne oder mehrere der zuvor beschriebenen Arbeitsorgane wie Getreideschneidwerk 2, Dreschwerk 7, Reinigungseinrichtung 14, Häckselvorrichtung 16, Hordenschüttler 18 etc., und/oder die Fahrgeschwindigkeit des Mähdreschers 1 regeln.

Die Gutverteileinrichtung 25 kann beispielsweise einen Radialverteiler 39 aufweisen, durch den der Häckselgutstrom 24 auf dem Boden 26 im rückwärtigen Bereich des Mähdreschers 1 verteilt wird. Der Radialverteiler 39 kann dabei auslenkbare Streubleche 40 und/oder ein oder mehrere Wurfgebläse 41 aufweisen. Als Regelungsmaßnahmen, mit denen die Regelungseinrichtung 27 basierend auf der erstellten Prognose Einfluss auf die Gutverteilung nehmen kann, sind beispielsweise die Regelung der Auslenkung der Streubleche 40, die Regelung der Oszillationsfrequenz der Streubleche 40 und/oder die Regelung der Verteilkurve der Streubleche 40 denkbar. Zusätzlich oder alternativ ist auch die Regelung der Drehzahl des Wurfgebläses 41 oder der Wurfgebläse 41 denkbar. Hinsichtlich der konstruktiven Realisierung und der Regelbarkeit des Radialverteilers 39 darf ebenfalls auf die DE 10 2014 113 965 A1 verwiesen werden, deren Inhalt auch insoweit zum Gegenstand der vorliegenden Anmeldung gemacht wird.

Schließlich kann die Regelungseinrichtung 27 auch eine Datenausgabeeinheit 42 aufweisen, die hier und vorzugsweise eine Anzeigeeinrichtung 43 aufweist und zur Ausgabe der von der Bildverarbeitungseinheit 30 verarbeiteten Bilder dient. Die Datenausgabeeinheit 42 ist dabei insbesondere konfiguriert, die jeweilige Prognoseinformation und/oder die jeweiligen Geschwindigkeiten des Geschwindigkeitskennfelds graphisch darzustellen. Denkbar wäre eine solche Darstellung der Prognoseinformationen auch durch die Anzeigeeinrichtung 43, die dann beispielsweise eine Abbildung des in Fig. 2 oben gestrichelt dargestellten Bereichs der optischen Erfassung als Bild oder Bildsequenz darstellt und in dieser Abbildung zusätzlich die Prognose für die Wurfweite und/oder Querverteilung graphisch anzeigt, beispielsweise wie dies in Fig. 2 anhand der kleinen Ringsymbole dargestellt ist.

### Bezugszeichenliste:

- 1: Mähdrescher
- 2: Getreideschneidwerk
- 3: Schrägförderer
- 4: Querförderorgan
- 5: Erntegutstrom
- 6: umlaufender Förderer
- 7: Dreschwerk
- 8: Dreschtrommel
- 9: Dreschkorb
- 10: erster Erntegutteilstrom
- 11: zweiter Erntegutteilstrom
- 12: Vorbereitungsboden
- 13: Siebebenen
- 14: Reinigungseinrichtung
- 15: Gebläseeinheit
- 16: Häckselvorrichtung
- 17: Strohleittrommel
- 18: Hordenschüttler
- 19: Abscheideorgan
- 20: Rücklaufboden
- 21: Förderelevatoren
- 22: Korntank
- 23: Korntankentleerförderer
- 24: Häckselgutstrom
- 25: Gutverteileinrichtung
- 26: Boden
- 27: Regelungseinrichtung
- 28: Sensoreinheit
- 29: Kamera
- 30: Bildverarbeitungseinheit
- 31: Recheneinheit
- 32: abgeernteter Feldabschnitt
- 33: nicht-abgeernteter Feldabschnitt
- 34: Fahrspur
- 35: Gutanalysesensor
- 36: Drohne
- 37: Heckbereich
- 38: Fahrerassistenzsystem
- 39: Radialverteiler
- 40: Streubleche
- 41: Wurfgebläse
- 42: Datenausgabeeinheit
- 43: Anzeigeeinrichtung

## Patentansprüche

1. Mähdrescher
mit einer Häckselvorrichtung (16) konfiguriert zum Zerkleinern von Erntegut, das durch den Mähdrescher (1) geführt und dabei verarbeitet wird, und dadurch Erzeugen eines Häckselgutstroms (24),
mit einer Gutverteileinrichtung (25) konfiguriert zum Verteilen des durch diese aus dem Mähdrescher (1) austretenden Häckselgutstroms (24) auf dem Boden (26) im rückwärtigen Bereich des Mähdreschers (1) und
mit einer Regelungseinrichtung (27), die eine Sensoreinheit (28) zur optischen Erfassung des aus der Gutverteileinrichtung (25) austretenden Häckselgutstroms (24) und eine Bildverarbeitungseinheit (30) zur Verarbeitung von Bildern, die von der Sensoreinheit (28) basierend auf dem optisch erfassten Häckselgutstrom (24) erzeugt werden, aufweist,
**dadurch gekennzeichnet,**
**dass** die Bildverarbeitungseinheit (30) konfiguriert ist, basierend auf den von der Sensoreinheit (28) erzeugten Bildern die Methode des optischen Flusses anzuwenden, um die Austragsgeschwindigkeit des aus der Gutverteileinrichtung (25) austretenden Häckselgutstroms (24) zu ermitteln und eine Prognose zu erstellen, welche Verteilung des Häckselgutstroms (24) auf dem Boden (26) erwartet werden kann.

2. Mähdrescher nach Anspruch 1, **dadurch gekennzeichnet, dass** die Bildverarbeitungseinheit (30) basierend auf den von der Sensoreinheit (28) erzeugten Bildern ein Geschwindigkeitskennfeld erzeugt, vorzugsweise, dass das Geschwindigkeitskennfeld Gutflussgeschwindigkeiten des aus der Gutverteileinrichtung (25) austretenden Häckselgutstroms (24) umfasst.

3. Mähdrescher nach Anspruch 1 oder 2, **dadurch gekennzeichnet, dass** die Bildverarbeitungseinheit (30) zur Erstellung des Geschwindigkeitskennfelds derart konfiguriert ist, dass sie jeweils zwei aufeinanderfolgende, insbesondere jeweils zwei unmittelbar aufeinanderfolgende, Bilder einer von der Sensoreinheit (28) erzeugten Bildsequenz zu einem Bildpaar gruppiert, wobei eine Zeitspanne zwischen den Bildern des jeweiligen Bildpaares von der Bildverarbeitungseinheit (30) erfasst wird und/oder vorgegeben ist, und wobei jedes Bild des Bildpaares ein Intensitätsmuster aufweist.

4. Mähdrescher nach Anspruch 3, **dadurch gekennzeichnet, dass** die Bildverarbeitungseinheit (30) zur Erstellung des Geschwindigkeitskennfelds derart konfiguriert ist, dass sie Positionsverschiebungen von den Intensitätsmustern zwischen den Bildern des jeweiligen Bildpaares ermittelt, wobei die Positionsverschiebungen Verschiebungsbeträge und Verschiebungsrichtungen von den Intensitätsmustern umfassen, vorzugsweise, dass die Verschiebungsbeträge und Verschiebungsrichtungen für jedes Bildpaar jeweils als Vektoren eines Vektorfeldes des jeweiligen Bildpaares zusammengefasst werden.

5. Mähdrescher nach Anspruch 4, **dadurch gekennzeichnet, dass** die Bildverarbeitungseinheit (30) konfiguriert ist, aus den Verschiebungsbeträgen von den Intensitätsmustern zwischen den Bildern des jeweiligen Bildpaares und der Zeitspanne zwischen den Bildern des jeweiligen Bildpaares Geschwindigkeiten zu berechnen, die Gutflussgeschwindigkeiten des Häckselgutstroms (24) sind.

6. Mähdrescher nach einem der vorhergehenden Ansprüche, **dadurch gekennzeichnet, dass** mit der Sensoreinheit (28) einer oder mehrere der wurfeigenschaftsrelevanten Parameter des Häckselgutes "Häckselgutdichte", "Häckselgutmasse", "Häckselgutfeuchte", "Häcksellänge", "Häckselaufspleißung", "Häckselzähigkeit" und "Fruchtart" ermittelt werden.

7. Mähdrescher nach Anspruch 6, **dadurch gekennzeichnet, dass** die Sensoreinheit (28) zur Ermittlung der wurfeigenschaftsrelevanten Parameter einen oder mehrere Gutanalysesensoren (35), insbesondere Kameras (29), aufweist.

8. Mähdrescher nach einem der vorhergehenden Ansprüche, **dadurch gekennzeichnet, dass** einer oder mehrere Sensoren (29, 35) der Sensoreinheit (28) am Mähdrescher (1) und/oder einer dem Mähdrescher (1) zugeordneten Drohne (36) angeordnet sind.

9. Mähdrescher nach einem der Ansprüche 6 bis 8, **dadurch gekennzeichnet, dass** die Bildverarbeitungseinheit (30), insbesondere eine Recheneinheit (31) der Bildverarbeitungseinheit (30), zur Erstellung der Prognose, welche Verteilung des Häckselgutstroms (24) auf dem Boden (26) erwartet werden kann, einen oder mehrere der ermittelten wurfeigenschaftsrelevanten Parameter berücksichtigt.

10. Mähdrescher nach Anspruch 9, **dadurch gekennzeichnet, dass** die Bildverarbeitungseinheit (30), insbesondere die Recheneinheit (31), zur Erstellung der Prognose, welche Verteilung des Häckselgutstroms (24) auf dem Boden (26) erwartet werden kann, das Verhältnis der ermittelten Austragsgeschwindigkeit zu einem oder mehreren der wurfeigenschaftsrelevanten Parameter, insbesondere zur Häckselgutdichte und/oder Häckselgutmasse, berücksichtigt.

11. Mähdrescher nach einem der vorhergehenden Ansprüche, **dadurch gekennzeichnet, dass** die Prognose, welche Verteilung des Häckselgutstroms (24) auf dem Boden (26) erwartet werden kann, eine Prognoseinformation über die Wurfweite des Häckselgutes und/oder einer Prognoseinformation über die Querverteilung des Häckselgutes umfasst.

12. Mähdrescher nach einem der vorhergehenden Ansprüche, **dadurch gekennzeichnet, dass** die Regelungseinrichtung (27) konfiguriert ist, basierend auf der erstellten Prognose, insbesondere der Prognoseinformation über die Wurfweite des Häckselgutes und/oder der Prognoseinformation über die Querverteilung des Häckselgutes, die Gutverteileinrichtung (25) und/oder weitere Arbeitsorgane (2, 7, 14, 16, 18) des Mähdreschers (1) und/oder die Fahrgeschwindigkeit des Mähdreschers (1) zu regeln.

13. Mähdrescher nach einem der vorhergehenden Ansprüche, **dadurch gekennzeichnet, dass** die Gutverteileinrichtung (25) einen Radialverteiler (39) aufweist, durch den der Häckselgutstrom (24) auf dem Boden (26) den rückwärtigen Bereich des Mähdreschers (1) verteilt wird, wobei der Radialverteiler (39) auslenkbare Streubleche (40) und/oder ein oder mehrere Wurfgebläse (41) aufweist, vorzugsweise, dass die Regelungseinrichtung (27) konfiguriert ist, basierend auf der erstellten Prognose, insbesondere der Prognoseinformation über die Wurfweite des Häckselgutes und/oder der Prognoseinformation über die Querverteilung des Häckselgutes, die Auslenkung, die Oszillationsfrequenz und/oder die Verteilkurve der Streubleche (40) und/oder die Drehzahl des Wurfgebläses (41) oder der Wurfgebläse (41) zu regeln.

14. Mähdrescher nach einem der vorhergehenden Ansprüche, **dadurch gekennzeichnet, dass** die Regelungseinrichtung (27) eine Datenausgabeeinheit (42) zur Ausgabe der von der Bildverarbeitungseinheit (30) verarbeiteten Bilder aufweist.

15. Mähdrescher nach Anspruch 14, **dadurch gekennzeichnet, dass** die Datenausgabeeinheit (42) konfiguriert ist, die jeweilige Prognoseinformation und/oder die jeweiligen Geschwindigkeiten des Geschwindigkeitskennfelds graphisch darzustellen, vorzugsweise, dass die graphische Darstellung der jeweiligen Prognoseinformation und/oder der jeweiligen Geschwindigkeiten des Geschwindigkeitskennfelds in einer Anzeigeeinrichtung (43) der Datenausgabeeinheit (42) dargestellt werden.

16. Verfahren zum Betrieb eines Mähdreschers (1), insbesondere eines Mähdreschers (1) nach einem der vorhergehenden Ansprüche,
mit einer Häckselvorrichtung (16) konfiguriert zum Zerkleinern von Erntegut, das durch den Mähdrescher (1) geführt und dabei verarbeitet wird, und dadurch Erzeugen eines Häckselgutstroms (24),
mit einer Gutverteileinrichtung (25) konfiguriert zum Verteilen des durch diese aus dem Mähdrescher (1) austretenden Häckselgutstroms (24) auf den Boden (26) im rückwärtigen Bereich des Mähdreschers (1) und
mit einer Regelungseinrichtung (27), die eine Sensoreinheit (28) zur optischen Erfassung des aus der Gutverteileinrichtung (25) austretenden Häckselgutstroms (24) und eine Bildverarbeitungseinheit (30) zur Verarbeitung von Bildern, die von der Sensoreinheit (28) basierend auf dem optisch erfassten Häckselgutstrom (24) erzeugt werden, aufweist,
**dadurch gekennzeichnet,**
**dass** die Bildverarbeitungseinheit (30) basierend auf den von der Sensoreinheit (28) erzeugten Bildern die Methode des optischen Flusses anwendet und damit die Austragsgeschwindigkeit des aus der Gutverteileinrichtung (25) austretenden Häckselgutstroms (24) ermittelt und eine Prognose erstellt, welche Verteilung des Häckselgutstroms (24) auf dem Boden (26) erwartet werden kann.

## Claims

1. A combine harvester
with a chopping device (16) configured to comminute harvested material which is passed through the combine harvester (1) and processed at the same time and a flow of chopped material (24) is produced thereby,
with a material spreading device (25) configured to spread the flow of chopped material (24) leaving the combine harvester (1) over the ground (26) in the rearward region of the combine harvester (1), and
with a control device (27) which has a sensor unit (28) for optical detection of the flow of chopped material (24) leaving the material spreading device (25) and an image processing unit (30) for processing images which are produced by the sensor unit (28) based on the optically detected flow of chopped material (24),
**characterized in that**
the image processing unit (30) is configured to employ the optical flow method to determine the discharge velocity of the flow of chopped material (24) leaving the material spreading device (25) based on the images produced by the sensor unit (28) and to make a prediction regarding the spread of the flow of chopped material (24) over the ground (26) which can be expected.

2. The combine harvester according to claim 1, **characterized in that** the image processing unit (30) produces a velocity map based on the images produced by the sensor unit (28), preferably **in that** the velocity map comprises material flow velocities for the flow of chopped material (24) leaving the material spreading device (25).

3. The combine harvester according to claim 1 or claim 2, **characterized in that** in order to compile the velocity map, the image processing unit (30) is configured in a manner such that in each case it groups two consecutive images, in particular two immediately consecutive images in each case, of a sequence of images produced by the sensor unit (28) into an image pair, wherein the time interval between the images of the respective image pair is detected and/or specified by the image processing unit (30), and wherein each image of the image pair has an intensity pattern.

4. The combine harvester according to claim 3, **characterized in that** in order to compile the velocity map, the image processing unit (30) is configured in a manner such that it determines positional shifts from the intensity patterns between the images of the respective image pair, wherein the positional shifts comprise shift values and shift directions from the intensity patterns, preferably **in that** the shift values and shift directions are combined for each image pair respectively as vectors of a vector field for the respective image pair.

5. The combine harvester according to claim 4, **characterized in that** the image processing unit (30) is configured to calculate velocities from the shift values of the intensity patterns between the images of the respective image pair and the time interval between the images of the respective image pair which are material flow velocities for the flow of chopped material (24).

6. The combine harvester according to one of the preceding claims, **characterized in that** one or more of the parameters "chopped material density", "chopped material mass", "chopped material moisture", "chopped material length", "chopped material fraying", "chopped material toughness" and "fruit type" of the chopped material which are relevant to the spreading properties are determined with the sensor unit (28).

7. The combine harvester according to claim 6, **characterized in that** the sensor unit (28) has one or more material analysis sensors (35), in particular cameras (29), for determining the parameters which are relevant to the spreading properties.

8. The combine harvester according to one of the preceding claims, **characterized in that** one or more sensors (29, 35) of the sensor unit (28) are disposed on the combine harvester (1) and/or on a drone (36) associated with the combine harvester (1).

9. The combine harvester according to one of claims 6 to 8, **characterized in that** the image processing unit (30), in particular a processing unit (31) of the image processing unit (30), takes into account one or more of the determined parameters which are relevant to the spreading properties in order to make the prediction regarding the spread of the flow of chopped material (24) over the ground (26) which can be expected.

10. The combine harvester according to claim 9, **characterized in that** in order to make the prediction regarding the spread of the flow of chopped material (24) over the ground (26) which can be expected, the image processing unit (30), in particular the processing unit (31), takes into consideration the ratio of the determined discharge velocity with respect to one or more of the parameters which are relevant to the spreading properties, in particular the chopped material density and/or the chopped material mass.

11. The combine harvester according to one of the preceding claims, **characterized in that** the prediction regarding the spread of the flow of chopped material (24) over the ground (26) which can be expected comprises predictive information regarding the spread width of the chopped material and/or predictive information regarding the transverse spread of the chopped material.

12. The combine harvester according to one of the preceding claims, **characterized in that** the control device (27) is configured to control the material spreading device (25) and/or other operating units (2, 7, 14, 16, 18) of the combine harvester (1) and/or the drive speed of the combine harvester (1) based on the prediction that is made, in particular the predictive information regarding the spread width of the chopped material and/or the predictive information regarding the transverse spread of the chopped material.

13. The combine harvester according to one of the preceding claims, **characterized in that** the material spreading device (25) has a radial spreader (39) through which the flow of chopped material (24) is spread over the ground (26) in the rearward region of the combine harvester (1), wherein the radial spreader (39) has movable spreader plates (40) and/or one or more spreader blowers (41), preferably **in that** the control device (27) is configured to control the movement, the oscillation frequency and/or the spread curve of the spreader plates (40) and/or the rotational speed of the spreader blower (41) or the spreader blowers (41) based on the prediction that has been made, in particular the predictive information regarding the spread width of the chopped material and/or the predictive information regarding the transverse spread of the chopped material.

14. The combine harvester according to one of the preceding claims, **characterized in that** the control device (27) has a data output unit (42) for outputting the images processed by the image processing unit (30).

15. The combine harvester according to claim 14, **characterized in that** the data output unit (42) is configured to depict the respective predictive information and/or the respective velocities of the velocity map graphically, preferably **in that** the graphical representation of the respective predictive information and/or the respective velocities of the velocity map is depicted in a display device (43) of the data output unit (42).

16. A method for operating a combine harvester (1), in particular a combine harvester (1) according to one of the preceding claims,
with a chopping device (16) configured to comminute harvested material which is passed through the combine harvester (1) and processed at the same time, and produces a flow of chopped material (24) thereby,
with a material spreading device (25) configured to spread the flow of chopped material (24) leaving the combine harvester (1) through it onto the ground (26) in the rearward region of the combine harvester (1), and
with a control device (27) which has a sensor unit (28) for optical detection of the flow of chopped material (24) leaving the material spreading device (25) and an image processing unit (30) for processing images which are produced by the sensor unit (28) based on the optically detected flow of chopped material (24),
**characterized in that**
based on the images produced by the sensor unit (28), the image processing unit (30) employs the optical flow method to determine the discharge velocity of the flow of chopped material (24) leaving the material spreading device (25) and makes a prediction regarding the spread of the flow of chopped material (24) over the ground (26) which can be expected.

## Revendications

1. Moissonneuse-batteuse
comprenant un dispositif de hachage (16) configuré pour broyer du produit récolté qui est guidé à travers la moissonneuse-batteuse (1) et en même temps traité, et pour générer ainsi un flux de produit haché (24), comprenant un équipement d'épandage de produit (25) configuré pour épandre sur le sol (26), dans la zone arrière de la moissonneuse-batteuse (1), le flux de produit haché (24) sortant de la moissonneuse-batteuse (1) à travers lui et
comprenant un équipement de régulation (27) qui comporte une unité de capteurs (28) pour la détection optique du flux de produit haché (24) sortant de l'équipement d'épandage de produit (25) et une unité de traitement d'image (30) pour le traitement d'images qui sont générées par l'unité de capteurs (28) sur la base du flux de produit haché détecté optiquement (24), **caractérisée en ce que**
l'unité de traitement d'image (30) est configurée pour appliquer la méthode du flux optique sur la base des images générées par l'unité de capteurs (28) afin de déterminer la vitesse de sortie du flux de produit haché (24) sortant de l'équipement d'épandage de produit (25) et d'établir un pronostic sur l'épandage du flux de produit haché (24) à attendre sur le sol (26) .

2. Moissonneuse-batteuse selon la revendication 1, **caractérisée en ce que**, sur la base des images générées par l'unité de capteurs (28), l'unité de traitement d'image (30) génère un diagramme caractéristique de vitesse, de préférence **en ce que** le diagramme caractéristique de vitesse inclut des vitesses de flux de produit du flux de produit haché (24) sortant de l'équipement d'épandage de produit (25).

3. Moissonneuse-batteuse selon la revendication 1 ou 2, **caractérisée en ce que** l'unité de traitement d'image (30) est configurée pour établir le diagramme caractéristique de vitesse de façon qu'il groupe en une paire d'images respectivement deux images successives, en particulier respectivement deux images immédiatement successives, d'une séquence d'images générée par l'unité de capteurs (28), un laps de temps entre les images de la paire d'images respective étant détecté par l'unité de traitement d'image (30) ou étant prescrit, et chaque image de la paire d'images présentant un motif d'intensité.

4. Moissonneuse-batteuse selon la revendication 3, **caractérisée en ce que**, pour établir le diagramme caractéristique de vitesse, l'unité de traitement d'image (30) est configurée de façon qu'elle détermine des décalages positionnels des motifs d'intensité entre les images de la paire d'images respective, les décalages positionnels incluant des valeurs de décalage et des directions de décalage des motifs d'intensité, de préférence **en ce que** les valeurs de décalage et les directions de décalage sont réunies pour chaque paire d'images en tant que vecteurs d'un champ vectoriel de la paire d'images respective.

5. Moissonneuse-batteuse selon la revendication 4, **caractérisée en ce que** l'unité de traitement d'image (30) est configurée pour calculer, à partir des valeurs de décalage des motifs d'intensité entre les images de la paire d'images respective et du laps de temps entre les images de la paire d'images respective, des vitesses qui sont des vitesses de flux de produit du flux de produit haché (24).

6. Moissonneuse-batteuse selon une des revendications précédentes, **caractérisée en ce qu'**avec l'unité de capteurs (28) sont déterminés un ou plusieurs des paramètres du produit haché pertinents pour la propriété d'éparpillement, « densité de produit haché », « masse de produit haché », « humidité de produit haché », « longueur de hachage », « hachage-fendage », « densité de hachage » et « type de culture ».

7. Moissonneuse-batteuse selon la revendication 6, **caractérisée en ce que**, pour déterminer les paramètres pertinents pour la propriété d'éparpillement, l'unité de capteurs (28) comporte un ou plusieurs capteurs d'analyse de produit (35), en particulier des caméras (29) .

8. Moissonneuse-batteuse selon une des revendications précédentes, **caractérisée en ce qu'**un ou plusieurs capteurs (29, 35) de l'unité de capteurs (28) sont disposés sur la moissonneuse-batteuse (1) et/ou sur un drone (36) associé à la moissonneuse-batteuse (1).

9. Moissonneuse-batteuse selon une des revendications 6 à 8, **caractérisée en ce que**, pour établir le pronostic de l'épandage du flux de produit haché (24) à attendre sur le sol (26), l'unité de traitement d'image (30), en particulier une unité de calcul (31) de l'unité de traitement d'image (30), prend en compte un ou plusieurs des paramètres pertinents pour la propriété d'éparpillement déterminés.

10. Moissonneuse-batteuse selon la revendication 9, **caractérisée en ce que**, pour établir le pronostic de l'épandage du flux de produit haché (24) à attendre sur le sol (26), l'unité de traitement d'image (30), en particulier l'unité de calcul (31) prend en compte le rapport de la vitesse de sortie déterminée à un ou plusieurs des paramètres pertinents pour la propriété d'éparpillement, en particulier à la densité de produit haché et/ou à la masse de produit haché.

11. Moissonneuse-batteuse selon une des revendications précédentes, **caractérisée en ce que** le pronostic de l'épandage du flux de produit haché (24) à attendre sur le sol (26) inclut une information pronosticielle sur la portée de projection du produit haché et/ou une information pronosticielle sur la répartition transversale du produit haché.

12. Moissonneuse-batteuse selon une des revendications précédentes, **caractérisée en ce que** l'équipement de régulation (27) est configuré pour réguler l'équipement d'épandage de produit (25) et/ou d'autres organes de travail (2, 7, 14, 16, 18) de la moissonneuse-batteuse (1) et/ou la vitesse de marche de la moissonneuse-batteuse (1) sur la base du pronostic établi, en particulier de l'information pronosticielle sur la portée de projection du produit haché et/ou de l'information pronosticielle sur la répartition transversale du produit haché.

13. Moissonneuse-batteuse selon une des revendications précédentes, **caractérisée en ce que** l'équipement d'épandage de produit (25) comporte un épandeur radial (39) par l'intermédiaire duquel le flux de produit haché (24) est épandu sur le sol (26) dans la zone arrière de la moissonneuse-batteuse (1), l'épandeur radial (39) comportant des tôles d'éparpillage déviables (40) et/ou une ou plusieurs souffleuses (41), de préférence **en ce que** l'équipement de régulation (27) est configuré pour réguler la fréquence d'oscillation et/ou la courbe d'épandage des tôles d'éparpillage (40) et/ou la vitesse de rotation de la souffleuse (41) ou des souffleuses (41).

14. Moissonneuse-batteuse selon une des revendications, **caractérisée en ce que** l'équipement de régulation (27) comporte une unité de sortie de données (42) pour sortir les images traitées par l'unité de traitement d'image (30).

15. Moissonneuse-batteuse selon la revendication 14, **caractérisée en ce que** l'unité de sortie de données (42) est configurée pour représenter graphiquement l'information pronosticielle respective et/ou les vitesses respectives du diagramme caractéristique de vitesse, de préférence **en ce que** la représentation graphique de l'information pronosticielle respective et/ou des vitesses respectives du diagramme caractéristique de vitesse est représentée dans un équipement d'affichage (43) de l'unité de sortie de données (42).

16. Procédé de fonctionnement d'une moissonneuse-batteuse (1), en particulier d'une moissonneuse-batteuse (1) selon une des revendications précédentes, comprenant un dispositif de hachage (16) configuré pour broyer du produit récolté qui est guidé à travers la moissonneuse-batteuse (1) et en même temps traité, et pour générer ainsi un flux de produit haché (24), comprenant un équipement d'épandage de produit (25) configuré pour épandre sur le sol (26), dans la zone arrière de la moissonneuse-batteuse (1), le flux de produit haché (24) sortant de la moissonneuse-batteuse (1) à travers lui et
comprenant un équipement de régulation (27) qui comporte une unité de capteurs (28) pour la détection optique du flux de produit haché (24) sortant de l'équipement d'épandage de produit (25) et une unité de traitement d'image (30) pour le traitement d'images qui sont générées par l'unité de capteurs (28) sur la base du flux de produit haché détecté optiquement (24), **caractérisé en ce que**
l'unité de traitement d'image (30) applique la méthode du flux optique sur la base des images générées par l'unité de capteurs (28) et détermine ainsi la vitesse de sortie du flux de produit haché (24) sortant de l'équipement d'épandage de produit (25) et établit un pronostic sur l'épandage du flux de produit haché (24) à attendre sur le sol (26).
